# EUROPEAN PATENT SPECIFICATION

(11) **EP 2 928 621 B1**
(45) Date of publication and mention of the grant of the patent: **27.04.2022**
(21) Application number: 13860506.8
(22) Date of filing: 05.12.2013
(51) Int. Cl.: B08B 13/00, G01N 1/02, B08B 1/00, B08B 9/00

(54) **AUTOMATIC CLEANING VALIDATION SWABBING DEVICES AND METHODS**
SCHRUBBVORRICHTUNGEN, UND -VERFAHREN MIT AUTOMATISCHER REINIGUNGSVALIDIERUNG
DISPOSITIFS ET PROCÉDÉS DE NETTOYAGE À TAMPON AVEC VALIDATION DE NETTOYAGE AUTOMATIQUE

(30) Priority: 07.12.2012 US 201261734723 P
(43) Date of publication of application: 14.10.2015
(73) Proprietor: Swabbot, Inc., Raleigh, NC 27614 (US); Mineo, Richard, Cary, North Carolina 27513 (US)
(72) Inventor: MINEO, Richard, Cary, North Carolina 27513 (US)
(74) Representative: Engstle, Verena
(86) International application number: PCT/US2013/073362
(87) International publication number: WO 2014/089320

(56) References cited:
- EP-A1- 0 319 438
- EP-A2- 1 882 532
- GB-A- 2 075 337
- RU-U1- 116 796
- SU-A1- 1 521 509
- SU-A1- 1 768 335
- US-A- 3 841 973
- US-A- 5 554 537
- US-A- 5 692 417
- US-A- 5 823 592

## Description

### PRIORITY DATA

This international patent application claims priority to U.S. Provisional Patent App. No. 61/734,723 entitled "AUTOMATIC CLEANING VALIDATION SWABBING DEVICES, METHODS, AND SYSTEMS," filed on December 7, 2012.

### FIELD OF THE INVENTION

The present invention generally relates to automated validation of surface cleanliness in biotechnology, pharmaceutical, medical-device, and related industries.

### BACKGROUND OF THE INVENTION

In biotechnology, pharmaceutical, medical-device, and related industries, cleanliness of surfaces and equipment is a critical issue. It can be very difficult to ascertain whether a proper amount of cleaning has been performed and/or maintained.

One current problem with cleaning validation sampling is human error and inconsistent execution. This issue is most seen in hard to reach areas such as inside tanks or vessels. Companies spend considerable amounts of time and money training and certifying individuals to perform swabbing. Even with a lot of training there is no guarantee that the sample will not yield a false passing result, since not enough surface was swabbed or they did not apply the correct amount of pressure. Even with the use of highly trained validation specialists, there is a significant risk of generating false positive or negative results due to variability in a number of factors including but not limited to actual swabbed surface area or actual pressure applied to the surface.

Confined space entry to perform swabbing is dangerous. Multiple people are needed (three minimum) to ensure the safety of the person swabbing the vessel. If swabbing is performed by use of a telescoping pole as opposed to vessel entry, then the risk of not properly performing the sampling increases due to the distance between the person controlling the swab and the swab location.

The document US3841973 A discloses a device and a method for automated cleaning validation, the device comprising a horizontally movable element, a swabbing motor connected to the horizontally movable element, whereby the swabbing motor is configured with a swab.

### SUMMARY OF THE INVENTION

In some variations, this invention provides an electro-mechanical device for automated cleaning validation of a selected surface in accordance with claim 1, the device comprising:
(a) an outer frame that defines a selected sampling area disposed within the outer frame, wherein the selected sampling area is contained within the selected surface;
(b) a horizontally movable inner shaft extending inward from the outer frame;
(c) an adjustable housing connected to the inner shaft, wherein the adjustable housing is configured with a vertically movable and rotatable dry or wetted swab capable of recovering residual contaminants on the selected surface; and
(d) an electronic controller for controlling the vertically movable and rotatable swab to validate cleaning of the selected surface.

Preferably, the frame is fabricated from a material (such as stainless steel) that does not contaminate the swab or the surface. In some embodiments, the shape of the frame is square, rectangular, circular, for example. In some embodiments, the selected sampling area is from 6,5 cm² to 65 cm² ( 1 square inch to 10 square inches), such as about 25,8 cm² (4 square inches) . The swab is typically a disposable swab, although a cleanable and reusable swab may be used instead.

In accordance with the invention, the horizontally movable inner shaft is connected to a screw drive or is movable by hydraulics. The adjustable housing is preferably configured to maintain a substantially constant surface pressure of the swab. A substantially constant surface pressure may be maintained with a spring, for example. In some embodiments, the adjustable housing includes a magnet for vertically moving the swab. The adjustable housing may include a gear or hydraulics for rotating the swab.

In accordance with the invention, the electronic controller is programmed to move the swab over a pre-defined pattern within the selected sampling area. For example, the pre-defined pattern may include two sequential patterns defining a first and second phase of movement of the swab. In some embodiments, movement of the swab in the first phase is perpendicular (with respect to the surface) to movement of the swab in the second phase.

The surface to be validated may be a substantially flat surface, or rounded (such as when the surface is contained in a pipe or tube). The surface may be contained within a vessel, reactor, a pipe, tank, or other equipment. The device may be disposed on an extension arm to allow the device to be positioned appropriately, without the need for a person to be close to the device for validation. This can aid in safety, since a human does not need to enter a vessel, reactor, or pipe, for example.

In some variations, an electro-mechanical device is provided for automated cleaning validation of a selected sampling area within a pipe or vessel (or tube, or other cylindrical member) in accordance with claim 9, comprising:
(a) an axial shaft extending axially within open volume of a pipe or vessel;
(b) a radial shaft, disposed perpendicular with the axial shaft, extending radially toward a surface of the pipe or vessel;
(c) an adjustable housing connected to the radial shaft, wherein the adjustable housing is configured with a movable and rotatable wetted swab capable of recovering residual contaminants on the selected sampling area; and
(d) an electronic controller for controlling the movable and rotatable swab to validate cleaning of the selected sampling area.

In some embodiments, the selected sampling area is from 6,5 cm² to 65 cm² ( 1 square inch to 10 square inches ) on the inner or outer surface of a pipe, tube, or other cylindrical member. The adjustable housing may be configured (such as with a spring or other known means) to maintain a substantially constant surface pressure of the swab. The swab is a disposable swab, in preferred embodiments. In accordance with the invention, the electronic controller is programmed to move the swab over a pre-defined pattern within the selected sampling area.

The present invention also provides an automated method of cleaning validation of a selected surface in accordance with claim 11, the method comprising:
(a) selecting a sampling area contained within a selected surface to be validated for proper cleaning;
(b) disposing a device according to the invention onto the sampling area;
(c) moving the swab over the sampling area to recover residual contaminants;
(d) measuring or testing the residual contaminants recovered during step (c); and
(e) based on measurements or tests obtained in step (d), indicating whether or not the selected surface was properly cleaned prior to step (a).

Certain devices of the invention, or methods of use, are shown in FIGS. 1-6, which are exemplary and not intended to restrict the scope herein.

### BRIEF DESCRIPTION OF THE DRAWINGS

FIG. 1 is a device schematic according to some embodiments of the invention.
FIG. 2 is a schematic of an adjustable housing for the device of FIG. 1, according to some embodiments of the invention.
FIG. 3 is a depiction of an exemplary pre-defined two-phase swab pattern, in some embodiments.
FIG. 4 depicts a user finding a tank wall so that it can be swabbed with a device, in some embodiments.
FIG. 5 depicts an exemplary GUI that aids a user to locate a tank wall for swabbing, in some embodiments.
FIG. 6 illustrates a step of breaking off and ejecting a swab tip, in some embodiments of the invention.

These and other embodiments, features, and advantages of the present invention will become more apparent to those skilled in the art when taken with reference to the following detailed description of the invention.

### DETAILED DESCRIPTION OF EMBODIMENTS OF THE INVENTION

Certain embodiments of the present invention will now be further described in more detail, in a manner that enables the claimed invention so that a person of ordinary skill in this art can make and use the present invention.

Unless otherwise indicated, all numbers expressing reaction conditions, concentrations, yields, and so forth used in the specification and claims are to be understood as being modified in all instances by the term "about." Accordingly, unless indicated to the contrary, the numerical parameters set forth in the following specification and attached claims are approximations that may vary depending at least upon the specific analytical technique. Any numerical value inherently contains certain errors necessarily resulting from the standard deviation found in its respective testing measurements.

As used in this specification and the appended claims, the singular forms "a," "an," and "the" include plural referents unless the context clearly indicates otherwise. Unless defined otherwise, all technical and scientific terms used herein have the same meaning as is commonly understood by one of ordinary skill in the art to which this invention belongs.

The term "comprising," which is synonymous with "including," "containing," or "characterized by" is inclusive or open-ended and does not exclude additional, unrecited elements or method steps. "Comprising" is a term of art used in claim language which means that the named claim elements are essential, but other claim elements may be added and still form a construct within the scope of the claim.

As used herein, the phase "consisting of' excludes any element, step, or ingredient not specified in the claim. When the phrase "consists of' (or variations thereof) appears in a clause of the body of a claim, rather than immediately following the preamble, it limits only the element set forth in that clause; other elements are not excluded from the claim as a whole. As used herein, the phase "consisting essentially of' limits the scope of a claim to the specified elements or method steps, plus those that do not materially affect the basis and novel characteristic(s) of the claimed subject matter.

With respect to the terms "comprising," "consisting of," and "consisting essentially of," where one of these three terms is used herein, the presently disclosed and claimed subject matter may include the use of either of the other two terms. Thus in some embodiments not otherwise explicitly recited, any instance of "comprising" may be replaced by "consisting of' or, alternatively, by "consisting essentially of."

In some variations, this invention provides an electro-mechanical device for automated cleaning validation of a selected surface in accordance with claim 1, the device comprising:
(a) an outer frame that defines a selected sampling area disposed within the outer frame, wherein the selected sampling area is contained within the selected surface;
(b) a horizontally movable inner shaft extending inward from the outer frame;
(c) an adjustable housing connected to the inner shaft, wherein the adjustable housing is configured with a vertically movable and rotatable dry or wetted swab capable of recovering residual contaminants on the selected surface; and
(d) an electronic controller for controlling the vertically movable and rotatable swab to validate cleaning of the selected surface.

Preferably, the frame is fabricated from a material (such as stainless steel) that does not contaminate the swab or the surface. In some embodiments, the shape of the frame is square, rectangular, circular, for example. In some embodiments, the selected sampling area is from 6,5 cm² to 65 cm² ( 1 square inch to 10 square pinches), such as about p 25,8 cm² (4 square inches).

The swab is typically a disposable swab, although a cleanable and reusable swab may be used instead. Also, the frame contact surface may be disposable, such as with a disposable protective guard or cover. In some embodiments, a sanitization step may be carried out to ensure that the device is clean.

In accordance with the invention, the horizontally movable inner shaft is connected to a screw drive or is movable by hydraulics. The adjustable housing is preferably configured to maintain a substantially constant surface pressure of the swab. A substantially constant surface pressure may be maintained with a spring, for example. In some embodiments, the adjustable housing includes a magnet for vertically moving the swab. The adjustable housing may include a gear or hydraulics for rotating the swab.

In accordance with the invention, the electronic controller is programmed to move the swab over a pre-defined pattern within the selected sampling area. For example, the pre-defined pattern may include two sequential patterns defining a first and second phase of movement of the swab. In some embodiments, movement of the swab in the first phase is perpendicular (with respect to the surface) to movement of the swab in the second phase.

The surface to be validated may be a substantially flat surface, or rounded (such as when the surface is contained in a pipe or tube). The surface may be contained within a vessel, reactor, a pipe, tank, or other equipment. The device may be disposed on an extension arm to allow the device to be positioned appropriately, without the need for a person to be close to the device for validation. This can aid in safety, since a human does not need to enter a vessel, reactor, or pipe, for example.

In some variations, an electro-mechanical device is provided for automated cleaning validation of a selected sampling area within a pipe or vessel (or tube, or other cylindrical member) in accordance with claim 9, comprising:
(a) an axial shaft extending axially within open volume of a pipe or vessel;
(b) a radial shaft, disposed perpendicular with the axial shaft, extending radially toward a surface of the pipe or vessel;
(c) an adjustable housing connected to the radial shaft, wherein the adjustable housing is configured with a movable and rotatable wetted swab capable of recovering residual contaminants on the selected sampling area; and
(d) an electronic controller for controlling the movable and rotatable swab to validate cleaning of the selected sampling area.

In some embodiments, the selected sampling area is from 6,5 cm² to 65 cm² (1 square inch to 10 square inches ) on the inner or outer surface of a pipe, tube, or other cylindrical member. The adjustable housing may be configured (such as with a spring or other known means) to maintain a substantially constant surface pressure of the swab. The swab is a disposable swab, in preferred embodiments. In accordance with the invention, the electronic controller is programmed to move the swab over a pre-defined pattern within the selected sampling area.

The present invention also provides an automated method of cleaning validation of a selected surface in accordance with claim 11, the method comprising:
(a) selecting a sampling area contained within a selected surface to be validated for proper cleaning;
(b) disposing a device in accordance with the invention onto the sampling area;
(c) moving the swab over the sampling area to recover residual contaminants;
(d) measuring or testing the residual contaminants recovered during step (c); and
(e) based on measurements or tests obtained in step (d), indicating whether or not the selected surface was properly cleaned prior to step (a).

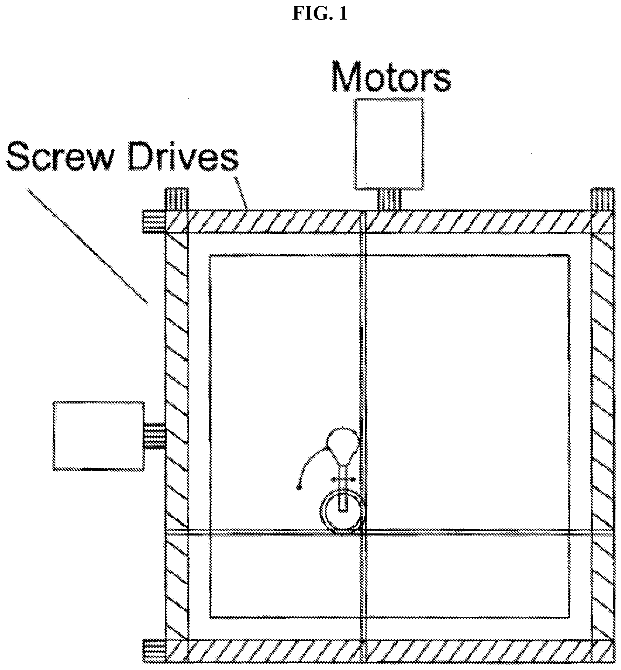

Some embodiments will be described with reference to FIGS. 1-6, which by no means should be construed as limiting the scope of the invention, which is delimited by the appended claims.

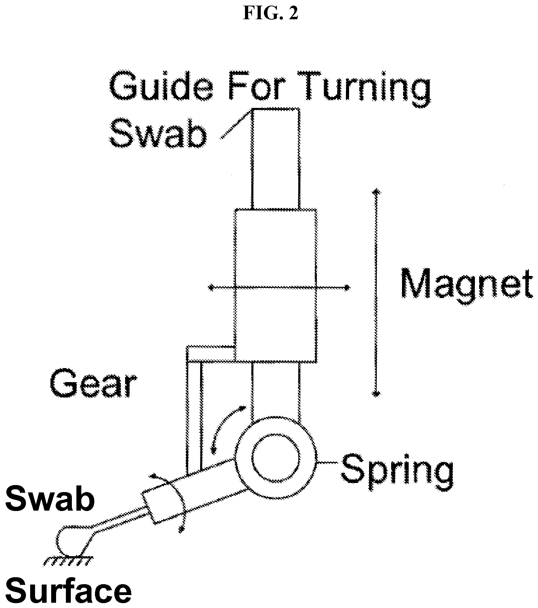

An automatic cleaning validation swabbing device, in some embodiments of the invention, is an electro-mechanical device that moves a dry or wetted swab over a cleaned surface to recover any remaining soil left over from the cleaning process (see FIGS. 1 and 2).

The device is able to accept a standard sampling swab that has been optionally wetted with the required liquid solution (e.g., water or a suitable solvent). Preferably the swab is held at an angle to the surface being sampled. The swab should have constant pressure to ensure maximum recovery of soil or contaminants.

The device moves the swab head, which is in contact with the cleaned surface, over a pre-defined pattern. The device should control the swab head over the entire pattern, without requiring manual intervention. The total area sampled during the pattern may be 25,8 cm² (4 square inches) , or any other area as may be desired or required according to certain protocols.

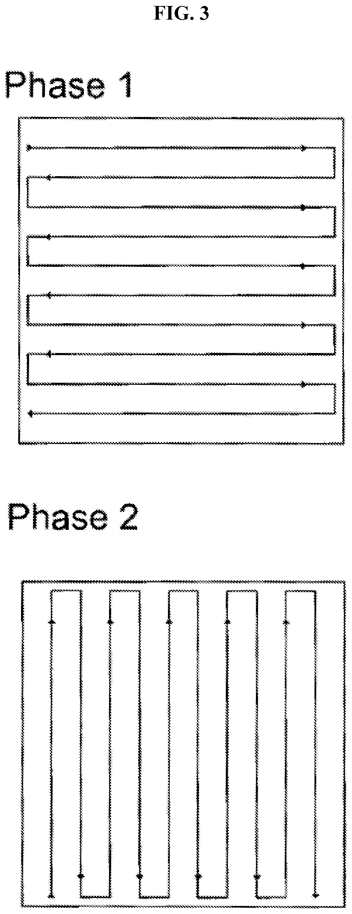

The swabbing pattern may be made up of two phases, such as depicted in FIGS. 3A and 3B. In some embodiments, the first phase requires that the swab head moves across the square pattern while maintaining the swab head orientation and constant pressure. The second phase in these embodiments requires the device to rotate the swab head 180 degrees before moving the swab head up and down the same square pattern while maintaining the swab head orientation and constant pressure. In other embodiments, the swab is moved in only one direction and is lifted between swabbing, e.g. in multiple straight lines or diagonal lines.

The device in some embodiments will allow for personnel to install and remove the swab without contacting the swab tip, to ensure accurate testing. In some embodiments, the device is capable of handling swabs with different shaft sizes (diameter and length) as well as swab tip.

The device may be made of off-the-shelf components with a number of items, such as the gears and guides. All outside (visible) surfaces may be made either from stainless steel or an acceptable gasket material (which, for example, may meet U.S. Food and Drug Administration requirements for the industry, if any). Any indicators used may be simple and off-the-shelf type components. In some embodiments, the device may be further customized and refined depending on the specific application to have more sophisticated components with added functionalities.

A benefit of this invention is to ensure swabbing consistency. This is achieved by a device that, among other things, maintains a consistent pressure between the swab and surface being sampled. In addition, the device of FIG. 1 ensures that the sample area is always a defined area, such as 25,8 cm² ( 4 square inches) (defined by the outer frame).

In the prior art, an individual moves a wetted swab over a surface to recover soils that may still be on the surface after cleaning. Some individuals use a template to define a 25,8 cm² (4 square inch) area for the sampling, but most just estimate the size of the area by sight. This technique is hard to perform when sampling vessels or tanks since the person executing the procedure can be far away from the sampling location or they must enter the vessel, which is costly and dangerous.

The device according to some embodiments may be placed on an extension arm and positioned inside the tank from the vessel manway. The device can operate effectively on curved surfaces and maintain correct contact with the surface.

Many variations of this invention are possible, as will be recognized by a person skilled in the art. In some embodiments, an adjustable pole may allow for the device to be placed inside confined spaces without personnel entry. In some embodiments, cameras and/or laser devices may be incorporated to guide the device to the correct location. In certain embodiments, the device is configured with an internal power supply (re-chargeable).

The device may be kept clean so that little or no residue is left on the surface being tested (swabbed). In some embodiments, the device may be configured with disposable covers to protect surfaces.

In this detailed description, reference has been made to multiple embodiments of the invention and non-limiting examples relating to how the invention can be understood and practiced. Other embodiments that do not provide all of the features and advantages set forth herein may be utilized, insofar as these are within the scope of the present invention as delimited by the appended claims.

Where methods and steps described above indicate certain events occurring in certain order, those of ordinary skill in the art will recognize that the ordering of certain steps may be modified and that such modifications are in accordance with the variations of the invention insofar as these are within the scope of the invention as delimited by the appended claims.

Additionally, certain of the steps may be performed concurrently in a parallel process when possible, as well as performed sequentially.

Therefore, to the extent that there are variations of the invention, which are within the scope of the inventions found in the appended claims, it is the intent that this patent will cover those variations as well. The present invention shall only be limited by what is claimed.

### EXAMPLE

An exemplary method of the invention is as follows. Note that not all of these steps are practiced in some embodiments, and many variations are possible.

Step 1. User transports device to tank.

Step 2. User frees validation device from storage mode.

Step 3. Validation device rotates around.

Step 4. Validation device stays up at accessible angle.

Step 5. While the device is hands-free a swab can be taken out.

Step 6. Swab is handled carefully.

Step 7. Box (with swabs) gets shut.

Step 8. Swab is inserted into device. This action may be automatic. For example, rollers or other means may be employed to draw in a swab.

Step 9. Disposable protective guard is installed on front of device.

Step 10. User unlocks manway.

Step 11. User opens up manway.

Step 12. Validation device is inserted through manway.

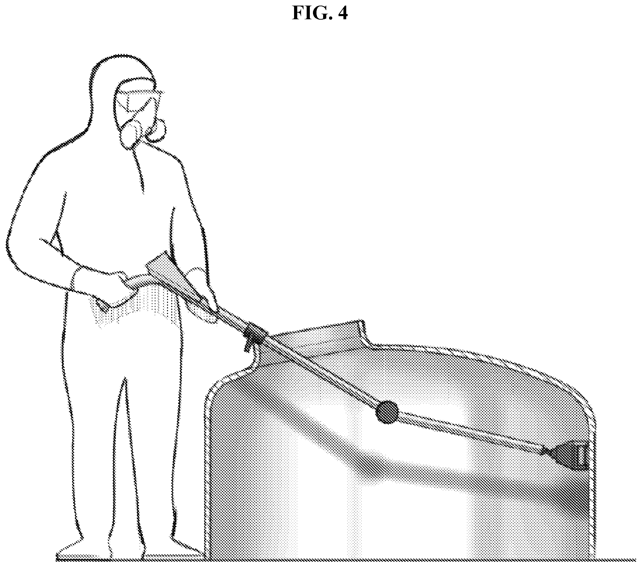

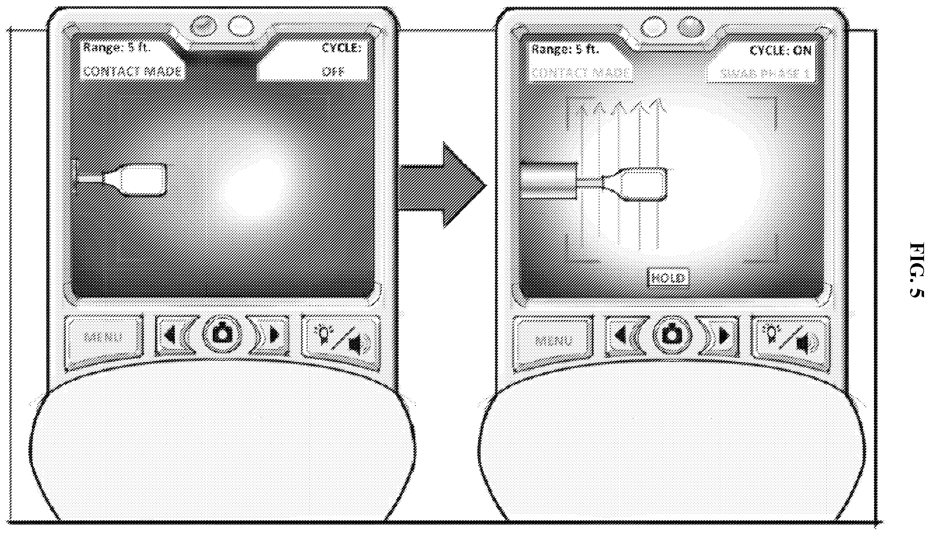

Step 13. User conducts visual inspection and finds tank wall through a graphical user interface (GUI). FIG. 4 depicts the user finding the tank wall, and FIG. 5 depicts an exemplary GUI. Optionally, lasers or other visual guides may be employed to assist in this step.

Step 14. Hook supports validation device along tank rim.

Step 15. Device moves swab over defined 2. 5,1 × 5,1 cm ( 2 × 2 in.) area. Device moves swab along vertical axis in its first phase. On completion of phase 1, device rotates 90 degrees while swab is flipped 180 degrees. Device completes its last phase by swabbing along the horizontal axis.

Step 16. Device is pulled out of manway when validation test is complete.

Step 17. User secures device onto the stand.

Step 18. User removes protective cover.

Step 19. Swab is sent to "home" position so it is accessible.

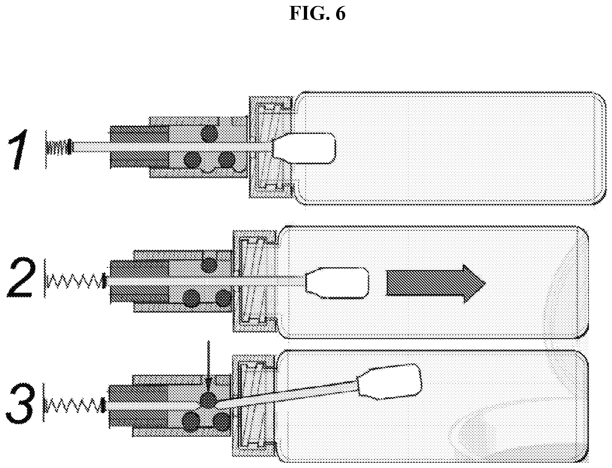

Step 20. Container is screwed on to device to break off and eject swab tip. FIG. 6 illustrates this step.

Step 21. User lowers container and swab.

Step 22. User screws on cap.

Step 23. Device is put back into storage mode.

Step 24. User activates sterilization cycle on stand.

## Claims

1. An electro-mechanical device for automated cleaning validation of a selected surface, said device comprising:
(a) an outer frame that defines a selected sampling area disposed within said outer frame, wherein said selected sampling area is contained within said selected surface;
(b) a horizontally movable inner shaft extending inward from said outer frame and being connected to a screw drive or movable by hydraulics;
(c) an adjustable housing connected to said inner shaft, wherein said adjustable housing is configured with a vertically movable and rotatable dry or wetted swab capable of recovering residual contaminants on said selected surface; and
(d) an electronic controller for controlling said vertically movable and rotatable swab to validate cleaning of said selected surface, wherein said electronic controller is programmed to move said swab over a pre-defined pattern within said selected sampling area.

2. The electro-mechanical device of claim 1, wherein said frame is fabricated from a material that does not contaminate said swab or said surface.

3. The electro-mechanical device of claim 1, wherein said outer frame is configured to define a selected sampling area from 6,5 cm² (1 square inch) to 65 cm² (10 square inches).

4. The electro-mechanical device of claim 1, wherein said adjustable housing is configured to maintain a constant surface pressure of said swab.

5. The electro-mechanical device of claim 1, wherein said adjustable housing includes a magnet for vertically moving said swab.

6. The electro-mechanical device of claim 1, wherein said adjustable housing includes a gear for rotating said swab.

7. The electro-mechanical device of claim 1, wherein said adjustable housing includes hydraulics for rotating said swab.

8. The electro-mechanical device of claim 1, wherein said device is disposed on an extension arm.

9. An electro-mechanical device for automated cleaning validation of a selected sampling area within a pipe or vessel, said device comprising:
(a) an axial shaft adapted to extend axially within open volume of a pipe or vessel and being connected to a screw drive or movable by hydraulics;
(b) a radial shaft, disposed perpendicular with said axial shaft, adapted to extend radially toward a surface of said pipe or vessel;
(c) an adjustable housing connected to said radial shaft, wherein said adjustable housing is configured with a movable and rotatable dry or wetted swab capable of recovering residual contaminants on said selected sampling area; and
(d) an electronic controller for controlling said movable and rotatable swab to validate cleaning of said selected sampling area, wherein said electronic controller is programmed to move said swab over a pre-defined pattern within said selected sampling area.

10. The electro-mechanical device of claim 9, wherein said adjustable housing is configured to maintain a constant surface pressure of said swab.

11. An automated method of cleaning validation of a selected surface, said method comprising:
(a) selecting a sampling area contained within a selected surface to be validated for proper cleaning;
(b) disposing a device according to any of claims 1 to 10 onto said sampling area;
(c) moving said swab over a pre-defined pattern within said sampling area to recover residual
contaminants;
(d) measuring or testing said residual contaminants recovered during step (c); and
(e) based on measurements or tests obtained in step (d), indicating whether or not said selected surface was properly cleaned prior to step (a).

12. The method of claim 11, wherein said selected sampling area is from 6,5 cm² (1 square inch) to 65 cm² (10 square inches).

13. The method of claim 11, said method further comprising extending said device with an extension arm, whereby a human does not need to enter a vessel, reactor, or pipe.

## Patentansprüche

1. Eine elektromechanische Vorrichtung zur automatischen Reinigungsvalidierung einer ausgewählten Oberfläche, wobei die Vorrichtung umfasst:
(a) einen äußeren Rahmen, der einen ausgewählten Probenahmebereich definiert, der innerhalb des äußeren Rahmens angeordnet ist, wobei der ausgewählte Probenahmebereich innerhalb der ausgewählten Oberfläche enthalten ist;
(b) eine horizontal bewegliche innere Welle, die sich von dem äußeren Rahmen nach innen erstreckt und mit einem Schneckenantrieb verbunden oder durch Hydraulik bewegbar ist;
(c) ein einstellbares Gehäuse, das mit der inneren Welle verbunden ist, wobei das einstellbare Gehäuse mit einem vertikal beweglichen und drehbaren trockenen oder befeuchteten Tupfer konfiguriert ist, der in der Lage ist, restliche Verunreinigungen auf der ausgewählten Oberfläche zu gewinnen; und
(d) eine elektronische Steuerung zum Steuern des vertikal beweglichen und drehbaren Tupfers, um die Reinigung der ausgewählten Oberfläche zu validieren, wobei die elektronische Steuerung so programmiert ist, dass sie den Tupfer über ein vordefiniertes Muster innerhalb des ausgewählten Probenahmebereichs bewegt.

2. Die elektromechanische Vorrichtung nach Anspruch 1, wobei der Rahmen aus einem Material hergestellt ist, das den Tupfer oder die Oberfläche nicht verunreinigt.

3. Die elektromechanische Vorrichtung nach Anspruch 1, wobei der äußere Rahmen so konfiguriert ist, dass er einen ausgewählten Probenahmebereich von 6,5 cm² (1 Quadratzoll) bis 65 cm² (10 Quadratzoll) definiert.

4. Die elektromechanische Vorrichtung nach Anspruch 1, wobei das einstellbare Gehäuse so konfiguriert ist, dass es einen konstanten Oberflächendruck des Tupfers aufrechterhält.

5. Die elektromechanische Vorrichtung nach Anspruch 1, wobei das einstellbare Gehäuse einen Magneten zum vertikalen Bewegen des Tupfers enthält.

6. Die elektromechanische Vorrichtung nach Anspruch 1, wobei das einstellbare Gehäuse ein Getriebe zum Drehen des Tupfers enthält.

7. Die elektromechanische Vorrichtung nach Anspruch 1, wobei das einstellbare Gehäuse eine Hydraulik zum Drehen des Tupfers aufweist.

8. Die elektromechanische Vorrichtung nach Anspruch 1, wobei die Vorrichtung an einem Auslegerarm angeordnet ist.

9. Elektromechanische Vorrichtung zur automatischen Reinigungsvalidierung eines ausgewählten Probenahmebereichs in einem Rohr oder Behälters, wobei die Vorrichtung Folgendes umfasst:
(a) eine axiale Welle, die sich axial innerhalb des offenen Volumens eines Rohrs oder eines Behälters erstrecken kann und mit einem Schneckenantrieb verbunden oder hydraulisch bewegbar ist;
(b) eine radiale Welle, die senkrecht zu der axialen Welle angeordnet ist und sich radial zu einer Oberfläche des Rohrs oder Behälters hin erstreckt;
(c) ein einstellbares Gehäuse, das mit der radialen Welle verbunden ist, wobei das einstellbare Gehäuse mit einem beweglichen und drehbaren trockenen oder befeuchteten Tupfer konfiguriert ist, der in der Lage ist, restliche Verunreinigungen auf dem ausgewählten Probenahmebereich zu sammeln; und
(d) eine elektronische Steuerung zum Steuern des beweglichen und drehbaren Tupfers, um die Reinigung des ausgewählten Probenahmebereichs zu validieren, wobei die elektronische Steuerung so programmiert ist, dass sie den Tupfer über ein vordefiniertes Muster innerhalb des ausgewählten Probenahmebereichs bewegt.

10. Die elektromechanische Vorrichtung nach Anspruch 9, wobei das einstellbare Gehäuse so konfiguriert ist, dass es einen konstanten Oberflächendruck des Tupfers aufrechterhält.

11. Ein automatisiertes Verfahren zur Reinigungsvalidierung einer ausgewählten Oberfläche, wobei das Verfahren umfasst:
(a) Auswählen eines Probenahmebereichs, der in einer ausgewählten Oberfläche enthalten ist, die auf ordnungsgemäße Reinigung zu überprüfen ist;
(b) Anordnen einer Vorrichtung nach einem der Ansprüche 1 bis 10 auf dem Probenahmebereich;
(c) Bewegen des Tupfers über ein vordefiniertes Muster innerhalb des Probenahmebereichs, um restliche Verunreinigungen zu gewinnen;
(d) Messen oder Testen der in Schritt (c) gewonnenen Restverunreinigungen; und
(e) auf der Grundlage der in Schritt (d) erhaltenen Messungen oder Tests die Angabe, ob die ausgewählte Oberfläche vor Schritt (a) ordnungsgemäß gereinigt wurde oder nicht.

12. Verfahren nach Anspruch 11, wobei der ausgewählte Probenahmebereich zwischen 6,5 cm² (1 square inch) und 65 cm² (10 square inches) beträgt.

13. Verfahren nach Anspruch 11, wobei das Verfahren ferner das Ausfahren der Vorrichtung mit einem Verlängerungsarm umfasst, wodurch ein Mensch nicht in einen Behälter, einen Reaktor oder ein Rohr eintreten muss.

## Revendications

1. Dispositif électromécanique pour la validation automatisée du nettoyage d'une surface sélectionnée, ledit dispositif comprenant:
(a) un cadre extérieur qui définit une zone d'échantillonnage sélectionnée disposée à l'intérieur dudit cadre extérieur, dans lequel ladite zone d'échantillonnage sélectionnée est contenue dans ladite surface sélectionnée;
(b) un arbre intérieur mobile horizontalement qui s'étend vers l'intérieur dudit cadre extérieur et qui est relié à un entraînement par vis ou mobile par voie hydraulique;
(c) un boîtier réglable relié audit arbre interne, dans lequel ledit boîtier réglable est configuré avec un écouvillon sec ou mouillé mobile verticalement et rotatif capable de récupérer des contaminants résiduels sur ladite surface sélectionnée; et
(d) un contrôleur électronique pour commander ledit écouvillon mobile verticalement et rotatif pour valider le nettoyage de ladite surface sélectionnée, dans lequel ledit contrôleur électronique est programmé pour déplacer ledit écouvillon sur un modèle prédéfini dans ladite zone d'échantillonnage sélectionnée.

2. Le dispositif électromécanique de la revendication 1, dans lequel ledit cadre est fabriqué à partir d'un matériau qui ne contamine pas ledit écouvillon ou ladite surface.

3. Le dispositif électromécanique de la revendication 1, dans lequel ledit cadre extérieur est configuré pour définir une zone d'échantillonnage sélectionnée de 6,5 cm² (1 pouce carré) à 65 cm² (10 pouces carrés).

4. Le dispositif électromécanique de la revendication 1, dans lequel ledit boîtier réglable est configuré pour maintenir une pression de surface constante dudit écouvillon.

5. Le dispositif électromécanique de la revendication 1, dans lequel ledit boîtier réglable comprend un aimant pour déplacer verticalement ledit écouvillon.

6. Le dispositif électromécanique de la revendication 1, dans lequel ledit boîtier ajustable comprend un engrenage pour faire tourner ledit écouvillon.

7. Le dispositif électromécanique de la revendication 1, dans lequel ledit boîtier réglable comprend un système hydraulique pour faire tourner ledit écouvillon.

8. Le dispositif électromécanique de la revendication 1, dans lequel ledit dispositif est disposé sur un bras d'extension.

9. Dispositif électromécanique pour la validation automatisée du nettoyage d'une zone d'échantillonnage sélectionnée à l'intérieur d'un tuyau ou d'un récipient, ledit dispositif comprenant:
(a) un arbre axial adapté pour s'étendre axialement à l'intérieur du volume ouvert d'un tuyau ou d'un récipient et étant relié à un entraînement par vis ou mobile par voie hydraulique;
(b) un arbre radial, disposé perpendiculairement audit arbre axial, adapté pour s'étendre radialement vers une surface dudit tuyau ou récipient;
(c) un boîtier réglable relié audit arbre radial, dans lequel ledit boîtier réglable est configuré avec un écouvillon sec ou mouillé mobile et rotatif capable de récupérer des contaminants résiduels sur ladite zone d'échantillonnage sélectionnée; et
(d) un contrôleur électronique pour commander ledit écouvillon mobile et rotatif pour valider le nettoyage de ladite zone d'échantillonnage sélectionnée, dans lequel ledit contrôleur électronique est programmé pour déplacer ledit écouvillon sur un modèle prédéfini dans ladite zone d'échantillonnage sélectionnée.

10. Le dispositif électromécanique de la revendication 9, dans lequel ledit boîtier réglable est configuré pour maintenir une pression de surface constante dudit écouvillon.

11. Procédé automatisé de validation de nettoyage d'une surface sélectionnée, ledit procédé comprenant:
(a) la sélection d'une zone d'échantillonnage contenue dans une surface sélectionnée à valider pour un nettoyage approprié;
(b) disposer un dispositif selon l'une quelconque des revendications 1 à 10 sur ladite zone d'échantillonnage;
(c) déplacer ledit écouvillon sur un motif prédéfini à l'intérieur de ladite zone d'échantillonnage pour récupérer les contaminants résiduels ;
(d) mesurer ou tester lesdits contaminants résiduels récupérés au cours de l'étape (c); et
(e) sur la base des mesures ou des tests obtenus à l'étape (d), indiquer si oui ou non ladite surface sélectionnée a été correctement nettoyée avant l'étape (a).

12. Procédé de la revendication 11, dans lequel ladite surface d'échantillonnage sélectionnée est de 6,5 cm² (1 pouce carré) à 65 cm² (10 pouces carrés).

13. Procédé de la revendication 11, ledit procédé comprenant en outre l'extension dudit dispositif avec un bras d'extension, moyennant quoi un humain n'a pas besoin d'entrer dans un récipient, un réacteur ou un tuyau.
